# EUROPEAN PATENT APPLICATION

(11) **EP 2 618 247 A1**
(43) Date of publication of application: **24.07.2013**
(21) Application number: 12151950.8
(22) Date of filing: 20.01.2012
(51) Int. Cl.: G06F 3/048, G06F 21/00, H04M 1/67, H04M 1/725

(54) **Predictive context-aware dynamic lock screen**

(71) Applicant: Research In Motion Limited, Waterloo, ON N2L 3W8 (CA)
(72) Inventor: Chiriyankandath, Cipson Jose, Sunnyvale, CA California 94085 (US)
(74) Representative: Greenaway, Martin William

(57) **Abstract**

A method for displaying a lock screen on a device is provided. The method comprises using at least one of usage information for the device or context information for the device to predict at least one application likely to be used on the device during a time frame and, when the lock screen is displayed during the time frame, displaying on the lock screen at least one icon associated with launching the at least one predicted application.

## Description

### BACKGROUND

Devices such as mobile telephones, personal digital assistants, handheld computers, laptop computers, tablet computers, and similar devices typically have a display screen for displaying information. In some cases, the display screen includes a touch screen through which a user may provide inputs to the device by making physical contact with the screen. The term "display screen" will be used herein to refer to any such screen, regardless of whether the screen is merely capable of displaying information or is also capable of accepting inputs.

A display screen may have a locking feature wherein the device accepts only a limited set of inputs until an authentication procedure is performed. The authentication procedure may be the entry of a password or the performance of some other action that is known by the user of the device but is unlikely to be known to others. The locking feature may be activated automatically when the device has not received an input for an extended period of time, may be activated manually by the user, or may be activated in some other manner. Regardless of the manner in which the locking feature is activated, the display that appears on the display screen when the locking feature is activated may be referred to as a lock screen. Also, as used herein, the term "device" may refer to the portable devices mentioned above but may also refer to devices that are not transportable, such as desktop computers, set-top boxes, network appliances, or to any other devices that have a display screen.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 is a block diagram illustrating external components on a device, according to an implementation of the disclosure.

Figure 2 is a block diagram illustrating internal components in a device, according to an implementation of the disclosure.

Figure 3 is a flowchart for a method for displaying a lock screen, according to an implementation of the disclosure.

Figure 4 illustrates a device suitable for implementing the several aspects of the present disclosure.

### DETAILED DESCRIPTION

It should be understood at the outset that although illustrative implementations of one or more aspects of the present disclosure are provided below, the disclosed systems and/or methods may be implemented using any number of techniques, whether currently known or developed in the future. The disclosure should in no way be limited to the illustrative implementations, drawings, and techniques illustrated below, including the example designs and implementations illustrated and described herein, but may be modified within the scope of the appended claims along with their full scope of equivalents.

In some lock screen systems, a user must take multiple steps in order to launch an application after a lock screen has appeared. Specifically, the user must unlock the screen; search for the application's icon or other launch mechanism on the display screen or in a menu list, toolbar, ribbon, or some other location; and then select the launch mechanism.

In an implementation, the steps that are taken in launching an application after a lock screen has appeared may be reduced. When a lock screen is displayed, the display may include one or more icons or other input mechanisms that are associated with applications that are likely to be launched. That is, a prediction may be made of one or more actions that are likely to be taken after the currently displayed lock screen is unlocked. As described in more detail below, the prediction may be based on usage information and/or context information. The lock screen may then display an icon or other input mechanism associated with a predicted action. If one of these icons is selected, an authentication procedure, such as a password verification procedure, may be initiated. If the authentication procedure is completed successfully, an application associated with the icon may be automatically launched. In some cases, a main screen of the application may appear. In other cases, a specific sub-screen within the application may appear. For example, if the selected icon represents an email application, the main screen of the email application may be displayed. Alternatively, a specific email message, such as the most recently received message, may be opened.

So in contrast to systems where the completion of an authentication procedure causes a home screen for a device to be displayed or causes a previously displayed screen to be displayed, in an implementation a main screen of a desired application or a specific sub-screen of the desired application may be displayed. In this way, the steps of searching for and selecting a launch mechanism for the desired application may be eliminated. If an application that is desired to be launched is not represented by the icons that are displayed on the lock screen, a standard unlock procedure may be initiated through the use of an unlock icon and the launching of an application in the standard manner.

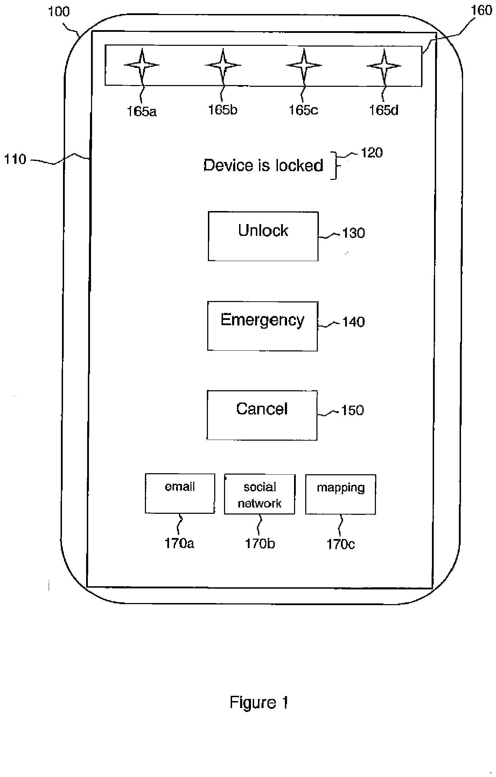

Figure 1 is a simplified block diagram of components that may appear on a display screen 110 of a device 100 capable of functioning in the manner of the implementations described herein. The device 100 includes a display screen 110 that may display information and possibly also accept user inputs. When a lock screen appears on the display screen 110, a message 120 may appear on the display screen 110 to indicate that the display screen 110 is locked. In this state, only a limited set of inputs may be provided into the device 100. An unlock icon 130 or similar input mechanism may appear on the lock screen to allow the device 100 to be unlocked. In the case of a touch screen, the unlock icon 130 may be selected when a physical touch is detected on the display screen 110 in the area where the unlock icon 130 appears. In other cases, the unlock icon 130 may be selected by the movement of a cursor over the unlock icon 130 and the press of a mouse button. In yet other cases, the unlock icon 130 may be selected in other ways. When the unlock icon 130 is selected, a screen may appear asking for entry of a password. Alternatively, some other type of authentication step may be requested. After authentication occurs, a home screen may be displayed or the last screen that was displayed before the lock screen appeared may be displayed.

In some cases, other input mechanisms may be present on the lock screen. For example, an emergency icon 140 may allow an emergency call to be made but may not allow access to any other functions on the device 100. A cancel icon 150 or other icons that permit only limited functionality may also appear.

The display screen 110 may also include a notification area 160 that is present regardless of whether the display screen 110 is in a locked or unlocked state. The notification area 160 may display icons 165 or other display mechanisms that provide notification of an event that has occurred on the device 100 and that may require attention. For example, an icon 165 may appear in the notification area 160 to provide an alert that a new email has been received or that the time for a scheduled meeting has arrived.

In an implementation, one or more application-related icons 170 may also appear on the display screen 110 when a lock screen is displayed. In other implementations, other types of additional input mechanisms may appear, but for simplicity such input mechanisms will be referred to hereinafter as icons. While three application-related icons 170 are shown, in other implementations, other numbers of application-related icons 170 may be present. The labels shown on the application-related icons 170 are merely examples, and it should be understood that icons associated with other applications may be present. The icons 170 that are displayed are selected automatically based on the usage patterns and/or current context associated with the device 100, as will be described in more detail below.

It should be noted that the application-related icons 170 may be different from the icons 165 that may appear in the notification area 160. The icons 165 in the notification area 160 act as display mechanisms and may not accept input. The application-related icons 170, on the other hand, may accept inputs. For example, an email notification icon 165a appearing in the notification area 160 may provide a notification that a new email has arrived but may not provide a capability for launching an email application. An email application icon 170a may allow an email application to be launched. Such an email application icon 170a may or may not display a notification that a new email has been received.

As an example, a prediction may be made that an attempt to launch an email application is likely to be made at the time the current lock screen is displayed. An email application icon 170a may then be displayed on the lock screen. If a user of the device 100 wishes to use the email application after unlocking the lock screen, the user may select the email application icon 170a. An authentication procedure may then be initiated. Upon the authentication procedure being successfully completed, the email application may be launched without the user having to perform any other steps.

As mentioned above, in an implementation, the application-related icons 170 that appear on a lock screen are automatically selected based on usage and/or context information. That is, an automated analysis may be made of the usage patterns for the applications on the device 100 and/or of the device's current environmental context. Based on such analyses, predictions may automatically be made of applications that are likely to be launched at a given time. Specifically, a prediction may be made of one or more applications that are likely to be selected for launching when a lock screen appears on the device 100. Icons 170 associated with the predicted applications may then be displayed on the lock screen. One of the icons 170 may then be selected to launch the associated application, as described above.

Usage information may include the frequency with which a given application is launched. Usage information may alternatively or further include a typical or total length of time an application remains open after being launched. Usage information may alternatively or further include the time of day and/or day of the week an application is typically launched. Usage information may alternatively or further include a location at which an application is typically launched. Usage information may include a combination of any of the foregoing types of information and/or other such patterns that may be discerned regarding the manner in which interactions occur with the applications on the device 100.

As an example of the use of usage information, an analysis of usage patterns may reveal that an email application on the device 100 tends to be launched around 8:00 every morning from Monday through Friday. Based on this information, an email application icon 170a may be displayed on the device's lock screen if the screen is locked around 8:00 AM on Monday through Friday. As another example, a usage pattern analysis may indicate that a social networking application is by far the most frequently used application on the device 100. Based on this information, a social networking application icon 170b may be displayed on the device's lock screen. As yet another example, both of these pieces of information may be taken into account, and both an email application icon 170a and a social networking application icon 170b may be displayed on a lock screen that appears on the device 100 around 8:00 AM on Monday through Friday. In this way, a choice may be made between either of these two icons in order for a desired application to be launched when the lock screen is unlocked. In any of these examples, a choice may be made to unlock the lock screen in the standard manner by selecting the unlock icon 130.

Context information may include a notification that appears on the device 100. Context information may alternatively or further include the device's current location. Context information may alternatively or further include an appointment time in the device's calendar. Context information may alternatively or further include an appointment location in the device's calendar. Context information may alternatively or further include whether it is currently day or night (that is, not necessarily the time of day but whether sunlight is available or not). Context information may alternatively or further include the current weather conditions. Context information may alternatively or further whether the current day is within a holiday season. Context information may include a combination of any of the foregoing types of information and/or any other information that is known to the device 100 and that may be related to the device's present or future activities or to present or future conditions that may be relevant to the device 100.

As an example of the use of context information, an email notification may appear in the notification area 160 of the display screen 110 when a lock screen is displayed. Using this context information, the device 100 may cause an email application icon 170a to appear on the lock screen. As described above, a selection of the email application icon 170a may then be made and, after authentication occurs, an email application may be launched. As another example, a positioning system in the device 100 may be aware that the device 100 is currently in a first city. A calendar application in the device 100 may be aware that an appointment is scheduled in a short time in a second city. Using this context information, the device 100 may determine that a mapping application is likely to be used for determining a route from the first city to the second city. The device 100 may then cause a mapping application icon 170c to appear on the lock screen.

In some cases, both usage information and context information may be used to determine one or more application-related icons 170 that may appear on a lock screen. For instance, continuing the examples given above, usage information may indicate that an email application icon 170a should appear on a lock screen at a particular time. Context information may indicate that a mapping application icon 170c should appear on the lock screen at approximately the same time. In some cases, both the email application icon 170a and the mapping application icon 170c may appear. In other cases, a prioritization system may be used whereby context information has a higher priority than usage information or vice versa, and only one of the email application icon 170a or the mapping application icon 170c may appear. In still other cases, certain applications may have priority over other applications regardless of whether the applications were selected based on usage information or context information. In yet other cases, the application-related icons 170 may be prioritized in other ways.

In another example, usage information and context information may be combined in the determination of one or more application-related icons 170 that should appear on a lock screen. For instance, an email notification may appear in the notification area 160 indicating that a new email has been received. Usage information may indicate that a first email application tends to be used during work hours and that a second email application tends to be used outside work hours. This usage information may be combined with the context-based email notification to cause an icon 170 associated with the first email application to appear on a lock screen during normal work hours and to cause an icon 170 associated with the second email application to appear on a lock screen outside normal work hours.

In an implementation, the size of the display screen 110 may be a factor in determining how many application-related icons 170 appear on a lock screen. A larger display screen 110 may accommodate more application-related icons 170 that can be easily read and selected than may a smaller display screen 110. Thus, the prioritization system mentioned above may take the size of the display screen 110 into account in determining which application-related icons 170 to display on a lock screen.

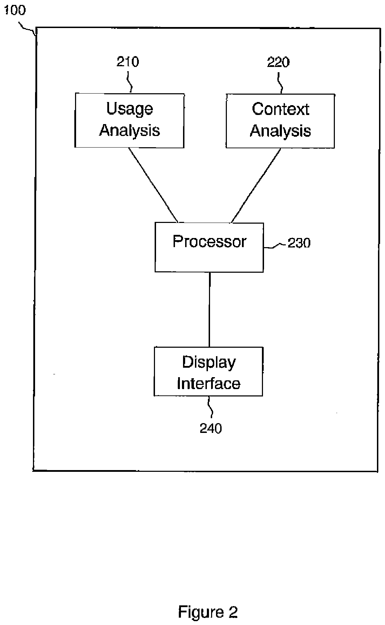

Figure 2 illustrates internal components that may be present in the device 100 and that may contribute to the determination of which application-related icons 170 should appear on a lock screen. A usage analysis component 210 may perform the analysis of usage information described above, and a context analysis component 220 may perform the analysis of context information described above. The usage analysis component 210 and the context analysis component 220 may provide their analyses to a processor 230. The processor 230 may use these analyses to predict one or more applications that are likely to be used. The processor 230 may then send information related to the predicted applications to a display interface 240, which may then cause application-related icons 170 associated with the predicted applications to be displayed on the display screen 110 of Figure 1.

It should be understood that Figure 2 is meant to depict the selection of application-related icons 170 at a high level. The components illustrated in Figure 2 are not necessarily discrete components as shown, but may be any combination of hardware, firmware, and software components capable of selecting the application-related icons 170. The functions of one of the components in Figure 2 may be shared by one or more of the other components, or the functions of multiple components may be combined into a single component. For example, the usage analysis component 210 and the context analysis component 220 may be software modules that are executed by the processor 230, or the display interface 240 may be integrated with the processor 230.

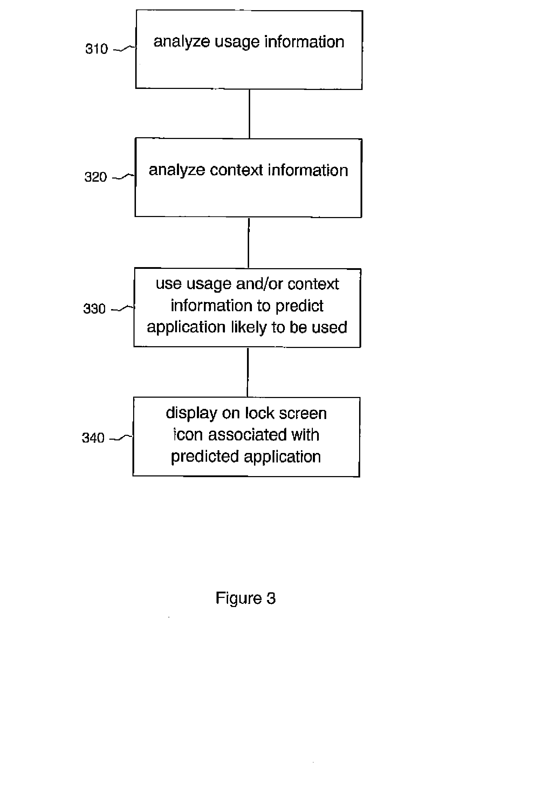

Figure 3 illustrates a method for displaying a lock screen. At box 310, usage information is analyzed. At box 320, context information is analyzed. It should be understood that both of the steps in boxes 310 and 320 need not be performed. That is, only the usage information may be analyzed or only the context information may be analyzed. Also, these steps do not necessarily need to be taken in the order shown. At box 330, the usage and/or context information is used to predict an application that is likely to be used. At box 340, an icon associated with the predicted application is displayed on the lock screen.

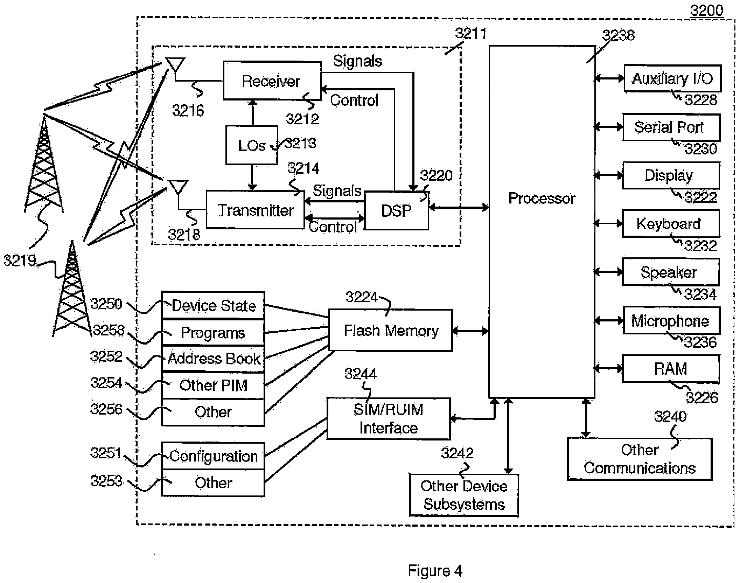

As mentioned above, the implementations described herein may be implemented by mobile telephones, personal digital assistants, handheld computers, laptop computers, tablet computers, or other types of devices. An example of such a device is described below with regard to Figure 4 and may be equivalent to the device 100 illustrated in Figures 1 and 2. Device 3200 may comprise a two-way wireless communication device having voice and data communication capabilities. In some embodiments, voice communication capabilities are optional. The device 3200 generally has the capability to communicate with other computer systems on the Internet. Depending on the exact functionality provided, the device may be referred to as a data messaging device, a two-way pager, a wireless e-mail device, a cellular telephone with data messaging capabilities, a wireless Internet appliance, a wireless device, a smart phone, a mobile device, or a data communication device, as examples.

Where the device 3200 is enabled for two-way communication, it may incorporate a communication subsystem 3211, including a receiver 3212 and a transmitter 3214, as well as associated components such as one or more antenna elements 3216 and 3218, local oscillators (LOs) 3213, and a processing module such as a digital signal processor (DSP) 3220. The particular design of the communication subsystem 3211 may be dependent upon the communication network in which the device 3200 is intended to operate.

Network access requirements may also vary depending upon the type of network 3219. In some networks, network access is associated with a subscriber or user of the device 3200. The device 3200 may require a removable user identity module (RUIM) or a subscriber identity module (SIM) card in order to operate on a network. The SIM/RUIM interface 3244 is typically similar to a card slot into which a SIM/RUIM card may be inserted. The SIM/RUIM card may have memory and may hold many key configurations 3251 and other information 3253, such as identification and subscriber-related information.

When required network registration or activation procedures have been completed, the device 3200 may send and receive communication signals over the network 3219. As illustrated, the network 3219 may consist of multiple base stations communicating with the device 3200.

Signals received by antenna 3216 through communication network 3219 are input to receiver 3212, which may perform such common receiver functions as signal amplification, frequency down conversion, filtering, channel selection, and the like. Analog to digital (A/D) conversion of a received signal allows more complex communication functions, such as demodulation and decoding to be performed in the DSP 3220. In a similar manner, signals to be transmitted are processed, including modulation and encoding for example, by DSP 3220 and are input to transmitter 3214 for digital to analog (D/A) conversion, frequency up conversion, filtering, amplification, and transmission over the communication network 3219 via antenna 3218. DSP 3220 not only processes communication signals but also provides for receiver and transmitter control. For example, the gains applied to communication signals in receiver 3212 and transmitter 3214 may be adaptively controlled through automatic gain control algorithms implemented in DSP 3220.

The device 3200 generally includes a processor 3238 which controls the overall operation of the device. The processor 3238 of Figure 4 may be equivalent to the processor 230 of Figure 2. Communication functions, including data and voice communications, are performed through communication subsystem 3211. Processor 3238 also interacts with further device subsystems such as the display 3222, flash memory 3224, random access memory (RAM) 3226, auxiliary input/output (I/O) subsystems 3228, serial port 3230, one or more keyboards or keypads 3232, speaker 3234, microphone 3236, other communication subsystem 3240 such as a short-range communications subsystem, and any other device subsystems generally designated as 3242. Serial port 3230 may include a USB port or other port currently known or developed in the future.

Some of the illustrated subsystems perform communication-related functions, whereas other subsystems may provide "resident" or on-device functions. Notably, some subsystems, such as keyboard 3232 and display 3222, for example, may be used for both communication-related functions, such as entering a text message for transmission over a communication network, and device-resident functions, such as a calculator or task list.

Operating system software used by the processor 3238 may be stored in a persistent store such as flash memory 3224, which may instead be a read-only memory (ROM) or similar storage element (not shown). The operating system, specific device applications, or parts thereof, may be temporarily loaded into a volatile memory such as RAM 3226. Received communication signals may also be stored in RAM 3226.

As shown, flash memory 3224 may be segregated into different areas for both computer programs 3258 and program data storage 3250, 3252, 3254 and 3256. These different storage types indicate that each program may allocate a portion of flash memory 3224 for their own data storage requirements. Processor 3238, in addition to its operating system functions, may enable execution of software applications on the device 3200. A predetermined set of applications that control basic operations, including at least data and voice communication applications for example, may typically be installed on the device 3200 during manufacturing. Other applications may be installed subsequently or dynamically.

Applications and software may be stored on any computer-readable storage medium. The computer-readable storage medium may be tangible or in a transitory/non-transitory medium such as optical (e.g., CD, DVD, etc.), magnetic (e.g., tape), or other memory currently known or developed in the future.

One software application may be a personal information manager (PIM) application having the ability to organize and manage data items relating to the user of the device such as, but not limited to, e-mail, calendar events, voice mails, appointments, and task items. One or more memory stores may be available on the device to facilitate storage of PIM data items. Such a PIM application may have the ability to send and receive data items via the wireless network 3219. Further applications may also be loaded onto the device 3200 through the network 3219, an auxiliary I/O subsystem 3228, serial port 3230, short-range communications subsystem 3240, or any other suitable subsystem 3242, and installed by a user in the RAM 3226 or a non-volatile store (not shown) for execution by the processor 3238. Such flexibility in application installation may increase the functionality of the device 3200 and may provide enhanced on-device functions, communication-related functions, or both. For example, secure communication applications may enable electronic commerce functions and other such financial transactions to be performed using the device 3200.

In a data communication mode, a received signal such as a text message or web page download may be processed by the communication subsystem 3211 and input to the processor 3238, which may further process the received signal for output to the display 3222, or alternatively to an auxiliary I/O device 3228.

A user of device 3200 may also compose data items, such as email messages for example, using the keyboard 3232, which may be a complete alphanumeric keyboard or telephone-type keypad, among others, in conjunction with the display 3222 and possibly an auxiliary I/O device 3228. Such composed items may then be transmitted over a communication network through the communication subsystem 3211.

For voice communications, overall operation of the device 3200 is similar, except that received signals may typically be output to a speaker 3234 and signals for transmission may be generated by a microphone 3236. Alternative voice or audio I/O subsystems, such as a voice message recording subsystem, may also be implemented on the device 3200. Although voice or audio signal output may be accomplished primarily through the speaker 3234, display 3222 may also be used to provide an indication of the identity of a calling party, the duration of a voice call, or other voice call-related information, for example.

Serial port 3230 may be implemented in a personal digital assistant (PDA)-type device for which synchronization with a user's desktop computer (not shown) may be desirable, but such a port is an optional device component. Such a port 3230 may enable a user to set preferences through an external device or software application and may extend the capabilities of the device 3200 by providing for information or software downloads to the device 3200 other than through a wireless communication network. The alternate download path may, for example, be used to load an encryption key onto the device 3200 through a direct and thus reliable and trusted connection to thereby enable secure device communication. Serial port 3230 may further be used to connect the device to a computer to act as a modem.

Other communications subsystems 3240, such as a short-range communications subsystem, are further optional components which may provide for communication between the device 3200 and different systems or devices, which need not necessarily be similar devices. For example, the subsystem 3240 may include an infrared device and associated circuits and components or a Bluetooth™ communication module to provide for communication with similarly enabled systems and devices. Subsystem 3240 may further include non-cellular communications such as WiFi, WiMAX, near field communication (NFC), and/or radio frequency identification (RFID).

In an implementation, a method for displaying a lock screen on a device is provided. The method comprises using at least one of usage information for the device or context information for the device to predict at least one application likely to be used on the device during a time frame. The method further comprises, when the lock screen is displayed during the time frame, displaying on the lock screen at least one icon associated with launching the at least one predicted application.

In another implementation, a device is provided: The device comprises a processor configured such that the device uses at least one of usage information for the device or context information for the device to predict at least one application likely to be used on the device during a time frame. The processor is further configured such that, when the lock screen is displayed during the time frame, the device displays on a lock screen at least one icon associated with launching the at least one predicted application.

In another implementation, a device is provided. The device comprises a lock screen that displays at least one input mechanism associated with an application detected by the device to have recently been used on the device, wherein, responsive to selection of the at least one input mechanism, a prompt for input of a password for unlocking the lock screen appears on the lock screen, and wherein an input of a correct password results in launching of the application.

While several implementations have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various implementations as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made without departing from the spirit and scope disclosed herein.

## Claims

1. A method for displaying a lock screen on a device, the method comprising:
using at least one of usage information for the device or context information for the device to predict at least one application likely to be used on the device during a time frame; and
when the lock screen is displayed during the time frame, displaying on the lock screen at least one icon associated with launching the at least one predicted application.

2. The method of claim 1, wherein, upon receipt of an indication of selection of the at least one icon, an authentication procedure for unlocking the lock screen is initiated.

3. The method of claim 2, wherein, upon the authentication procedure being completed successfully, the at least one predicted application or a specific screen of the predicted application is launched.

4. The method of claim 1, wherein the usage information comprises at least one of:
a frequency with which an application is launched;
a length of time an application remains open after being launched;
a time of day at which an application is launched;
a day of the week on which an application is launched; or
a location at which an application is launched.

5. The method of claim 1, wherein the context information comprises at least one of:
a notification that appears on the device;
a location of the device;
an appointment time in a calendar on the device;
an appointment location in a calendar on the device;
availability of sunlight;
current weather conditions; or
whether the current day is within a holiday season.

6. The method of claim 1, wherein, upon a plurality of applications being predicted to be likely to be used, the plurality of applications are prioritized according to at least one of:
a likelihood of at least one of the applications being used;
whether the prediction was based on usage information; or
whether the prediction was based on context information.

7. The method of claim 6, wherein a number of icons that appear on the lock screen is based on at least one of:
the prioritization; or
a size of a display screen on the device.

8. A device, comprising:
a processor configured such that the device uses at least one of usage information for the device or context information for the device to predict at least one application likely to be used on the device during a time frame, and further configured such that, when the lock screen is displayed during the time frame, the device displays on a lock screen at least one icon associated with launching the at least one predicted application.

9. The device of claim 8, wherein, upon receipt of an indication of selection of the at least one icon, an authentication procedure for unlocking the lock screen is initiated.

10. The device of claim 9, wherein, upon the authentication procedure being completed successfully, the at least one predicted application is launched.

11. The device of claim 8, wherein the usage information comprises at least one of:
a frequency with which an application is launched;
a length of time an application remains open after being launched;
a time of day at which an application is launched;
a day of the week on which an application is launched; or
a location at which an application is launched.

12. The device of claim 8, wherein the context information comprises at least one of:
a notification that appears on the device;
a location of the device;
an appointment time in a calendar on the device;
an appointment location in a calendar on the device;
availability of sunlight;
current weather conditions; or
whether the current day is within a holiday season.

13. The device of claim 8, wherein, upon a plurality of applications being predicted to be likely to be used, the plurality of applications are prioritized according to at least one of:
a likelihood of at least one of the applications being used;
whether the prediction was based on usage information; or
whether the prediction was based on context information.

14. The device of claim 13, wherein a number of icons that appear on the lock screen is based on at least one of:
the prioritization; or
a size of a display screen on the device.

15. A device, comprising:
a display to display a lock screen that illustrates at least one input mechanism associated with an application detected by the device to have recently been used on the device, wherein, responsive to selection of the at least one input mechanism, a prompt for input of a password for unlocking the lock screen appears on the lock screen, and wherein an input of a correct password results in launching of the application.

## Amended claims

### Amended claims in accordance with Rule 137(2) EPC.

**1.** A method for displaying a lock screen on a device, the method comprising:
using current context information for the device to predict at least one application likely to be used on the device during a time frame, the current context information comprising at least one of:
a current location of the device,
an appointment time in a current calendar appointment on the device,
an appointment location in a current calendar appointment on the device,
whether the current time is day or night,
current weather, or
whether the current day is within a holiday season; and
when the lock screen is displayed during the time frame, displaying on the lock screen at least one icon associated with launching the at least one predicted application.

**2.** The method of claim 1, wherein, upon receipt of an indication of selection of the at least one icon, an authentication procedure for unlocking the lock screen is initiated.

**3.** The method of claim 2, wherein, upon the authentication procedure being completed successfully, the at least one predicted application or a specific screen of the predicted application is launched.

**4.** The method of claim 1, further using usage information to predict at least one application likely to be used on the device during the time frame, the usage information comprising at least one of:
a frequency with which an application is launched;
a length of time an application remains open after being launched;
a time of day at which an application is launched;
a day of the week on which an application is launched; or
a location at which an application is launched.

**5.** The method of 4, wherein, upon a plurality of applications being predicted to be likely to be used, the plurality of applications are prioritized according to at least one of:
a likelihood of at least one of the applications being used;
whether the prediction was based on usage information; or
whether the prediction was based on context information.

**6.** The method of claim 5, wherein icons associated with the plurality of applications are selected for display on the lock screen based on a size of a display screen on the device and the prioritization of the plurality of applications.

**7.** A device, comprising:
a display for displaying a lock screen,
a processor configured such that the device uses current context information for the device to predict at least one application likely to be used on the device during a time frame, the current context information comprising at least one of:
a current location of the device,
an appointment time in a current calendar appointment on the device,
an appointment location in a current calendar appointment on the device,
whether the current time is day or night,
current weather, or
whether the current day is within a holiday season, and
the processor further configured such that, when the lock screen is displayed during the time frame, the device displays on the lock screen at least one icon associated with launching the at least one predicted application.

**8.** The device of claim 7, wherein, upon receipt of an indication of selection of the at least one icon, an authentication procedure for unlocking the lock screen is initiated.

**9.** The device of claim 8, wherein, upon the authentication procedure being completed successfully, the at least one predicted application is launched.

**10.** The device of claim 7, the processor further configured to use usage information to predict at least one application likely to be used on the device during the time frame, the usage information comprising at least one of:
a frequency with which an application is launched;
a length of time an application remains open after being launched;
a time of day at which an application is launched;
a day of the week on which an application is launched; or
a location at which an application is launched.

**11.** The device of 10, wherein, upon a plurality of applications being predicted to be likely to be used, the plurality of applications are prioritized according to at least one of:
a likelihood of at least one of the applications being used;
whether the prediction was based on usage information; or
whether the prediction was based on context information.

**12.** The device of claim 11, wherein icons associated with the plurality of applications are selected for display on the lock screen based on a size of a display screen on the device and the prioritization of the plurality of applications.
